# EUROPEAN PATENT APPLICATION

(11) **EP 4 760 885 A1**
(43) Date of publication of application: **17.06.2026**
(21) Application number: 25816119.9
(22) Date of filing: 24.01.2025
(51) Int. Cl.: H01M 10/658, H01M 50/178, H01M 50/211, H01M 10/625

(54) **BATTERY MODULE**

(30) Priority: 27.05.2024 KR 20240068743
(71) Applicant: LG Energy Solution, Ltd., Seoul 07335 (KR)
(72) Inventor: KIM, Byung-Kyu, Daejeon 34122 (KR)
(74) Representative: Plasseraud IP
(86) International application number: PCT/KR2025/001509
(87) International publication number: WO 2025/249701

(57) **Abstract**

Disclosed is a battery module. The battery module includes a frame providing a space therein; a plurality of battery cells positioned inside the frame; and a barrier configured to cover at least one of the plurality of battery cells, the barrier including an insulation member having a plurality of holes and a case accommodating the insulation member and having an interior configured as a vacuum.

## Description

### TECHNICAL FIELD

The present disclosure relates to a battery module.

The present application claims priority to Korean Patent Application No. 10-2024-0068743 filed on May 27, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a battery module including a barrier that blocks heat transfer between battery cells.

The present disclosure is also directed to improving the productivity of battery modules by integrally manufacturing a three-dimensional barrier shape.

The present disclosure is also directed to increasing the insulation effect by configuring the interior of the barrier as a vacuum.

The present disclosure is also directed to providing a battery module in which a venting direction is easily controlled due to the barrier.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a frame providing a space therein; a plurality of battery cells positioned inside the frame; and a barrier configured to cover at least one of the plurality of battery cells, the barrier including an insulation member having a plurality of holes and a case accommodating the insulation member and having an interior configured as a vacuum.

In addition, the plurality of battery cells may be stacked along a right and left direction, each of the plurality of battery cells may include an accommodation portion extending in a front and rear direction and containing an electrode assembly; and an electrode lead protruding forward from the accommodation portion, and the barrier may include an insulation portion positioned between the accommodation portions of neighboring battery cells among the plurality of battery cells.

In addition, the barrier may further include a pressurizing portion extending forward from the insulation portion and covering a front side of the accommodation portion of the neighboring battery cell.

In addition, a width of the pressurizing portion in the right and left direction may be larger than a width of the insulation portion in the right and left direction.

In addition, the insulation portion may have an accommodation space that is concave inward and faces the accommodation portion of the neighboring battery cell.

In addition, when a thermal event occurs, at least a portion of the accommodation portion of the neighboring battery cell may be accommodated in the accommodation space.

In addition, a concave depth of the accommodation space may become deeper as being close to a center portion based on a height of the insulation portion in an upper and lower direction.

In addition, a concave depth of the accommodation space may become deeper as being close to a center portion based on a length of the insulation portion in the front and rear direction.

A battery pack according to one aspect of the present disclosure may include the battery module of the present disclosure.

A vehicle according to another aspect of the present disclosure may include the battery module of the present disclosure.

### Advantageous Effects

According to at least one of the embodiments of the present disclosure, when a thermal event occurs, heat transfer may be blocked.

According to at least one of the embodiments of the present disclosure, the productivity of battery modules may be improved by integrally manufacturing a three-dimensional barrier shape.

According to at least one of the embodiments of the present disclosure, the insulation effect may be increased by configuring the interior of the barrier as a vacuum.

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a drawing showing the battery pack of FIG. 1, in which some components are exploded.
FIG. 3 is a drawing showing a battery module of FIG. 2.
FIG. 4 is a drawing showing the battery module of FIG. 3, in which some components are exploded.
FIG. 5 is a drawing showing a barrier of a battery module according to the first embodiment of the present disclosure.
FIG. 6 is a cross-sectional view taken along the cutting line C-C' of FIG. 5.
FIG. 7 is a cross-sectional view taken along the cutting line A-A' of FIG. 3.
FIG. 8 is a drawing showing a barrier of a battery module according to the second embodiment of the present disclosure.
FIG. 9 is a drawing showing a barrier of a battery module according to the third embodiment of the present disclosure.
FIG. 10 is a cross-sectional view taken along the cutting line D-D' of FIG. 9.
FIG. 11 is a cross-sectional view taken along the cutting line B-B' of FIG. 3.
FIG. 12 is a cross-sectional view taken along the cutting line E-E' of FIG. 9.
FIG. 13 is a cross-sectional view taken along the cutting line A-A' of FIG. 3.
FIG. 14 is a drawing showing a barrier of a battery module according to the fourth embodiment of the present disclosure.
FIG. 15 is a cross-sectional view taken along the cutting line F-F' of FIG. 14.
FIG. 16 is a cross-sectional view taken along the cutting line G-G' of FIG. 14.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

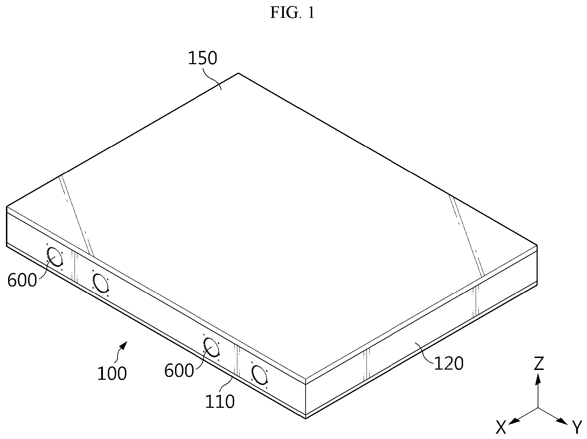

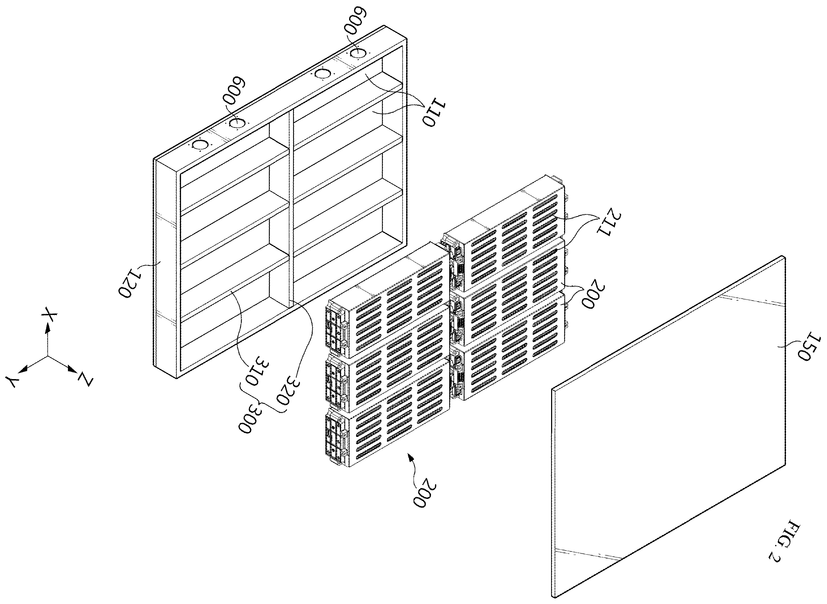

FIG. 1 is a diagram showing a battery pack according to an embodiment of the present disclosure. FIG. 2 is a drawing showing the battery pack of FIG. 1, in which some components are exploded.

Referring to FIGS. 1 and 2, the battery pack according to an embodiment of the present disclosure may include a pack case 100, a battery module 200, a partition wall 300, and a venting device 600.

The pack case 100 may include a base plate 110, a side wall 120, and a pack cover 150. The base plate 110 may have a rectangular shape. The base plate 110 may have a flat shape. The base plate 110 may form an appearance of the battery pack. The base plate 110 may provide an internal space of the battery pack.

The side wall 120 may be installed, fastened, coupled, fixed or attached to the upper surface of the base plate 110. The side wall 120 may be composed of four pieces. The side wall 120 may be arranged along the perimeter of the base plate 110. The side wall 120 may form the appearance of the battery pack. The side wall 120 may provide an internal space.

The pack cover 150 may have a rectangular plate shape. The pack cover 150 may have a flat plate shape. The pack cover 150 may form the appearance of the battery pack. The pack cover 150 may cover the internal space of the battery pack.

The battery module 200 may include a plurality of battery cells 220. At this time, the battery cell 220 may mean a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape.

The partition wall 300 may include a first partition wall 310 and a second partition wall 320. The partition wall 300 may be provided in plurality. The partition wall 300 may be installed, fastened, fixed, coupled, or attached to the upper surface of the base plate 110. The partition wall 300 may partition the internal space of the battery pack. The battery module 200 or the battery cell 220 may be positioned in the space partitioned by the partition wall 300.

The venting device 600 may be installed on the side wall 120. For example, the venting device 600 may be installed on the front side wall 120. For example, the venting device 600 may be a gas valve. The venting device 600 may open to discharge gas when the pressure inside the pack case 100 increases. In addition, the venting device 600 may block the outside air from flowing into the pack case 100. The venting device 600 may be provided in plurality.

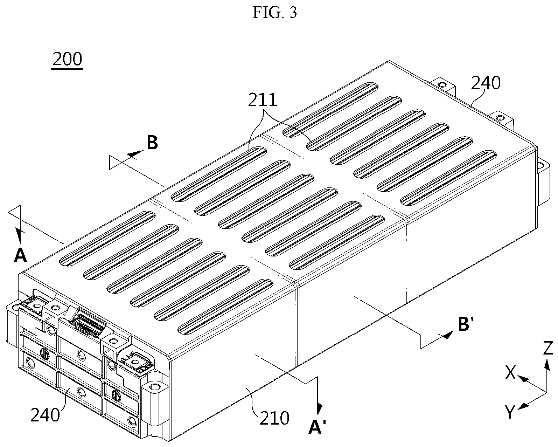

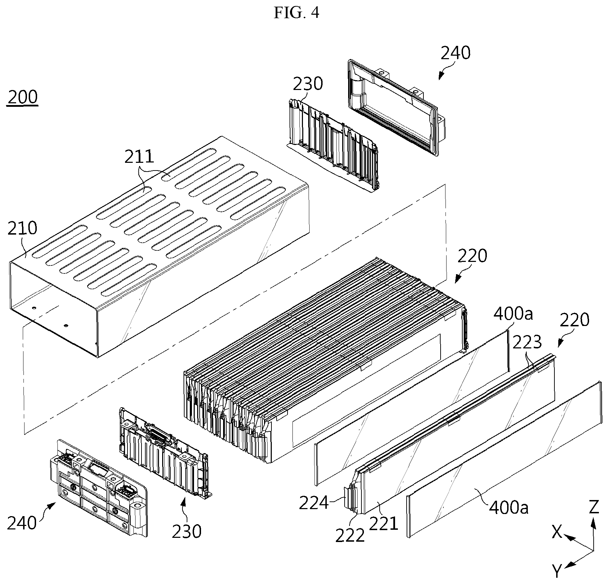

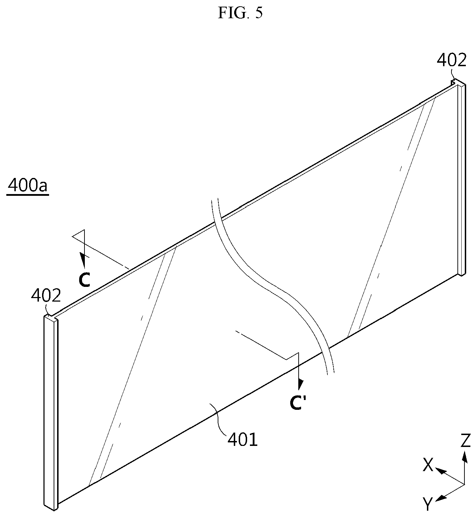

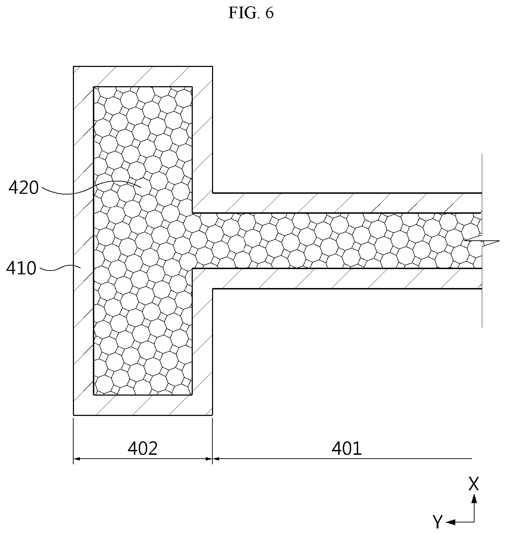

FIG. 3 is a drawing showing a battery module 200 of FIG. 2. FIG. 4 is a drawing showing the battery module 200 of FIG. 3, in which some components are exploded. FIG. 5 is a drawing showing a barrier 400a of a battery module 200 according to the first embodiment of the present disclosure. FIG. 6 is a cross-sectional view taken along the cutting line C-C' of FIG. 5.

Referring to FIGS. 3 to 6, the battery module 200 according to the first embodiment of the present disclosure may include a frame, a plurality of battery cells 220, and a barrier 400a.

The frame 210 may have a rectangular parallelepiped shape. The frame 210 may also be referred to as a module case 210. The frame 210 may provide a space therein. The frame 210 may have a top plate, a bottom plate, and a pair of side plates. In addition, the frame 210 may have open front and rear surfaces.

The frame 210 may have a venting hole 211 in the top plate. The venting hole 211 may communicate the inside and the outside of the frame 210. The venting hole 211 may be provided in plurality.

The battery cell 220 may be accommodated inside the frame 210. The plurality of battery cells 220 may be stacked in the right and left direction or the X-axis direction. The battery cell 220 may include an accommodation portion 221 containing an electrode assembly, a first sealing portion 222 protruding toward the front side and the rear side of the accommodation portion 221, and a second sealing portion 223 protruding toward the upper side of the accommodation portion 221. In addition, the battery cell 220 may include electrode leads 224 protruding toward the front side and the rear side of the first sealing portion 222, respectively. Each battery cell 220 may extend along the front and rear direction or the Y-axis direction. The electrode leads 224 may protrude toward the front and rear sides of each battery cell 220.

The barrier 400a may be positioned to cover at least one of the plurality of battery cells 220. The barrier 400a may be positioned inside the frame. The barrier 400a may include an insulation member 420 and a case 410.

The insulation member 420 may have a plurality of holes. Alternatively, the insulation member 420 may contain a porous material. For example, the insulation member 420 may contain a porous material including at least one of a silicone material, an aerogel, or glass fiber. Also, the insulation member 420 may contain a fire-resistant material.

The case 410 may accommodate the insulation member 420. The case 410 may be configured to entirely surround the insulation member 420. Also, the interior of the case 410 may be configured as a vacuum. The interior of the case 410 may be configured to have a pressure lower than atmospheric pressure. For example, the interior of the case 410 may be depressurized to about 50 mTorr. The case 410 may contain a metal foil material. For example, the case 410 may contain an aluminum foil material. Since the interior of the case 410 is configured as a vacuum, air may be removed from the interior of the plurality of holes of the insulation member 420. Alternatively, the case 410 may contain a sheet having refractory properties. Alternatively, the case 410 may include a sheet having hygroscopic properties.

According to this configuration of the present disclosure, the thermal safety of the battery module 200 may be improved. The barrier 400a may suppress heat propagation when a thermal event occurs. By removing the air inside the barrier 400a, the insulation effect of the barrier 400a may be increased. As a result, heat transfer by conduction or convection between the battery cells 220 may be suppressed.

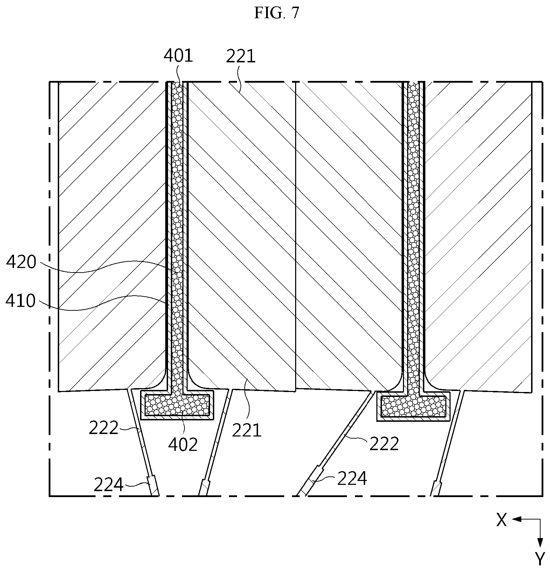

FIG. 7 is a cross-sectional view taken along the cutting line A-A' of FIG. 3. Referring to FIGS. 3 to 7, the barrier 400a of the battery module 200 according to the first embodiment of the present disclosure may include an insulation portion 401 positioned between the accommodation portions 221 of neighboring battery cells 220 among the plurality of battery cells 220. In addition, the barrier 400a may cover the accommodation portion 221. The insulation portion 401 may include at least a portion of the insulation member 420 and at least a portion of the case 410.

The barrier 400a may be provided in plurality. The plurality of barriers 400a may be provided for every two battery cells 220. In addition, the barrier 400a may cover the accommodation portion 221 of the battery cell 220 located at the outermost side among the plurality of battery cells 220.

According to this configuration of the present disclosure, the thermal safety of the battery module 200 may be improved. Since the barrier 400a is positioned between the accommodation portions 221, the insulation effect may be improved.

Referring to FIGS. 3 to 7, the battery module 200 according to the first embodiment of the present disclosure may include a bus bar frame assembly 230 and an end cover 240.

The bus bar frame assembly 230 may be provided at the front and rear sides of the plurality of battery cells 220, respectively. The bus bar frame assembly 230 may be electrically connected to the electrode leads 224 of the plurality of battery cells 220.

The pair of end covers 240 may be coupled to the front and rear sides of the frame 210, respectively. The pair of end covers 240 may cover the front and rear sides of the frame 210. The end covers 240 may have a rectangular shape.

Referring to FIGS. 3 to 7, the barrier 400a of the battery module 200 according to the first embodiment of the present disclosure may further include a pressurizing portion 402. The pressurizing portion 402 may extend forward from the insulation portion 401. The insulation member 420 constituting the pressurizing portion 402 and the insulation portion 401 may be formed integrally. The pressurizing portion 402 may cover the front side of the accommodation portion 221 of the neighboring battery cell 220. Alternatively, the pressurizing portion 402 may be in contact with the first sealing portion 222 of the neighboring battery cell 220. Alternatively, the pressurizing portion 402 may cover the first sealing portion 222 of the neighboring battery cell 220. Alternatively, the pressurizing portion 402 may pressurize the first sealing portion 222 of the neighboring battery cell 220.

In addition, the pressurizing portion 402 may be configured as a pair. The pressurizing portion 402 may extend rearward from the insulation portion 401. The pressurizing portion 402 extending rearward may cover the rear side of the accommodation portion 221 of the neighboring battery cell 220. The insulation member 420 constituting the pair of the pressurizing portions 402 and the insulation portion 401 may be formed integrally.

According to this configuration of the present disclosure, venting control of the battery cell 220 may be facilitated. Venting may be induced toward the upper side of the battery cell 220 as the pressurizing portion 402 pressurizes the first sealing portion 222 of the battery cell 220.

In addition, according to this configuration of the present disclosure, the productivity of the battery module 200 may be improved. Since the insulation member 420 is a porous material, the insulation member 420 may be easily formed or manufactured into various shapes. In addition, the barrier 400a may be easily manufactured into various shapes by wrapping the insulation member 420 with the case 410 and then performing vacuum packaging. Therefore, since the pressurizing portion 402 and the insulation portion 401 are formed integrally, the barrier 400a may have a three-dimensional shape. Since the barrier 400a is formed integrally, the number of parts of the battery module 200 may be reduced, and the productivity of the battery module 200 may be improved.

Referring to FIGS. 3 to 7, the width of the pressurizing portion 402 of the battery module 200 according to the first embodiment of the present disclosure in the right and left direction or the X-axis direction may be larger than the width of the insulation portion 401 in the right and left direction or the X-axis direction. In addition, the pressurizing portion 402 may extend along the upper and lower direction or the Z-axis direction. Since the pressurizing portion 402 has a width larger than the insulation portion 401, the first sealing portion 222 of the neighboring battery cell 220 may be effectively covered or pressurized.

According to this configuration of the present disclosure, venting control of the battery cell 220 may be facilitated.

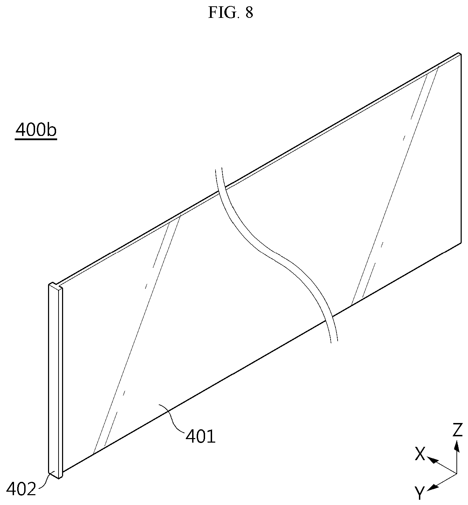

FIG. 8 is a drawing showing a barrier 400b of a battery module 200 according to the second embodiment of the present disclosure. Referring to FIG. 8, in the barrier 400b of the battery module 200 according to the second embodiment of the present disclosure, the pressurizing portion 402 may be formed only at the front side of the insulation portion 401. In addition, the pressurizing portion 402 may not be formed at the rear side of the insulation portion 401.

According to this configuration of the present disclosure, venting control of the battery cell 220 may be easily achieved. Since the pressurizing portion 402 is formed only at the front side of the insulation portion 401, venting may be induced toward the upper or rear side of the battery cell 220.

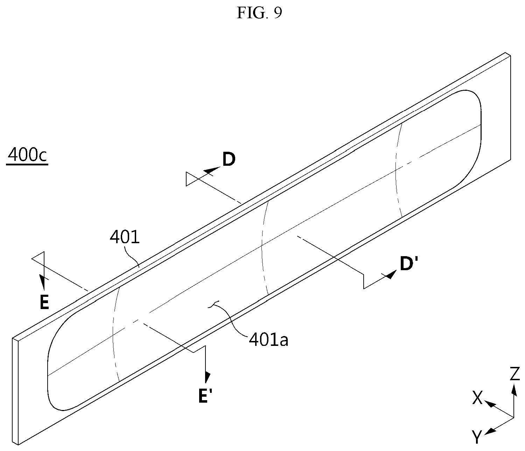

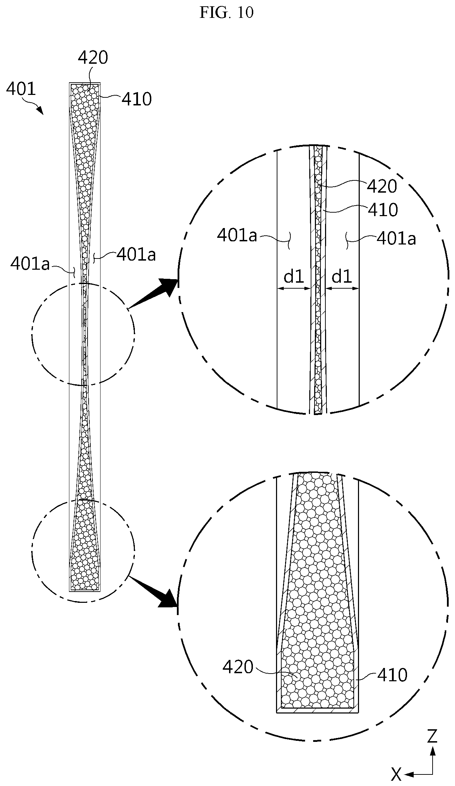

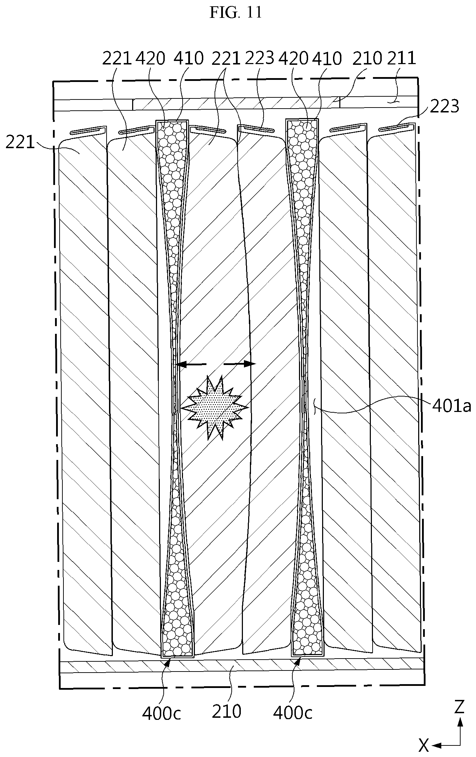

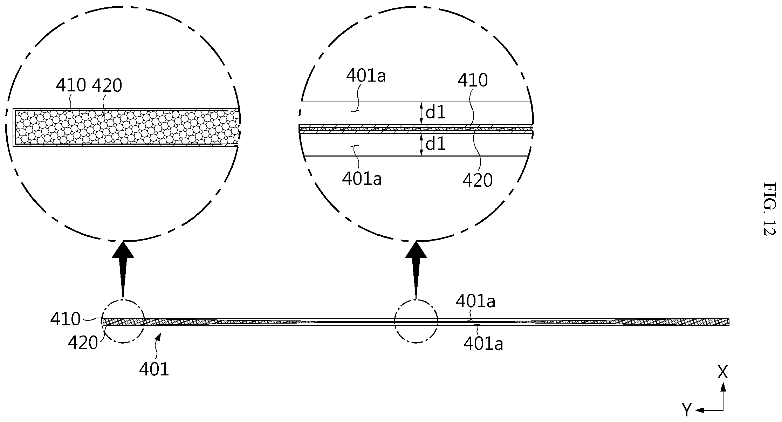

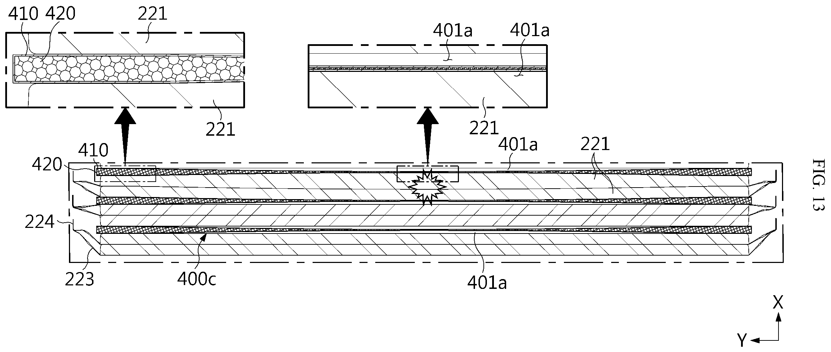

FIG. 9 is a drawing showing a barrier 400c of a battery module 200 according to the third embodiment of the present disclosure. FIG. 10 is a cross-sectional view taken along the cutting line D-D' of FIG. 9. FIG. 11 is a cross-sectional view taken along the cutting line B-B' of FIG. 3. FIG. 12 is a cross-sectional view taken along the cutting line E-E' of FIG. 9. FIG. 13 is a cross-sectional view taken along the cutting line A-A' of FIG. 3.

Referring to FIGS. 9 to 13, the barrier 400c of the battery module 200 according to the third embodiment of the present disclosure may include an accommodation space 401a. The accommodation space 401a may be formed by recessing at least a portion of the insulation portion 401 inward. The accommodation space 401a may be formed at both sides of the insulation portion 401. In addition, the accommodation space 401a may face the accommodation portion 221 of the battery cell 220.

Also, the barrier 400c may additionally have a pressurizing portion 402 on at least one of the front side and the rear side of the insulation portion 401.

According to this configuration of the present disclosure, the thermal safety of the battery module 200 may be improved. When a thermal event occurs, a swelling phenomenon may occur in the battery cell 220. Due to the swelling phenomenon, the battery cell 220 may swell in the right and left direction or the X-axis direction. At this time, at least a portion of the battery cell 220 where the swelling occurs may be accommodated in the accommodation space 401a. The barrier 400c may improve the thermal safety of the battery module 200 by absorbing the swelling of the battery cell 220 that is in contact with or facing the barrier 400c.

Referring to FIG. 10 and FIG. 11, the concave depth of the accommodation space 401a of the battery module 200 according to the third embodiment of the present disclosure may become deeper as being close to the center portion of the insulation portion 401. At this time, the center portion may mean a center portion based on the height of the insulation portion 401 in the upper and lower direction or the Z-axis direction. The concave depth may become deeper as being close to the center portion, and the insulation portion 401 may form a curved surface along the upper and lower direction or the Z-axis direction as a whole.

According to this configuration of the present disclosure, the barrier 400c may absorb swelling while increasing the insulation effect. When swelling occurs in the battery cell 220, the center portion of the accommodation portion 221 may swell most. At this time, since the insulation portion 401 is configured to form a curved surface, the thickness for insulation may be maintained while effectively absorbing the swelling.

In addition, according to this configuration of the present disclosure, the productivity of the battery module 200 may be improved. Since the insulation member 420 includes a porous material that is easy to work, the insulation member 420 may be manufactured to have a curved surface. In addition, the insulation member 420 may be formed integrally. Also, since the case 410 surrounds the insulation member 420 and the barrier 400c is manufactured through vacuum packaging, the insulation portion 401 may be formed to have a curved surface. In addition, since the barrier 400c is formed integrally, the number of parts of the battery module 200 may be reduced, and the productivity of the battery module 200 may be improved.

Referring to FIGS. 12 and 13, the concave depth of the accommodation space 401a of the battery module 200 according to the third embodiment of the present disclosure may become deeper as being close to the center portion of the insulation portion 401. At this time, the center portion may mean a center portion based on the length of the insulation portion 401 in the front and rear direction or the Y-axis direction. The concave depth may become deeper as being close to the center portion, and the insulation portion 401 may form a curved surface along the front and rear direction or the Y-axis direction as a whole.

According to this configuration of the present disclosure, the barrier 400c may absorb swelling while increasing the insulation effect. When swelling occurs in the battery cell 220, the center portion of the accommodation portion 221 may swell most. At this time, since the insulation portion 401 is configured to form a curved surface, it is possible to effectively absorb swelling while maintaining the thickness for insulation.

In addition, according to this configuration of the present disclosure, the productivity of the battery module 200 may be improved. Since the insulation member 420 includes a porous material that is easy to work, the insulation member 420 may be manufactured to have a curved surface. In addition, the insulation member 420 may be formed integrally. Also, since the case 410 surrounds the insulation member 420 and the barrier 400c is manufactured through vacuum packaging, the insulation portion 401 may be formed to have a curved surface. In addition, since the barrier 400c is formed integrally, the number of parts of the battery module 200 may be reduced, and the productivity of the battery module 200 may be improved.

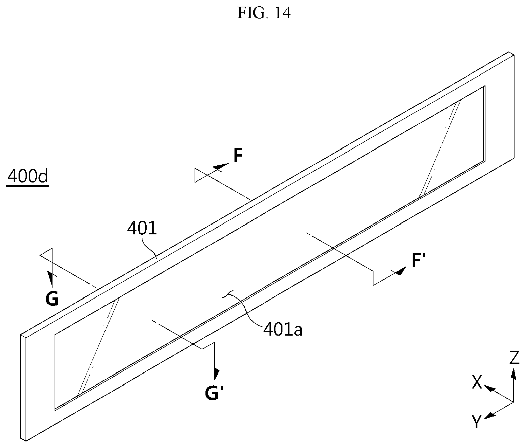

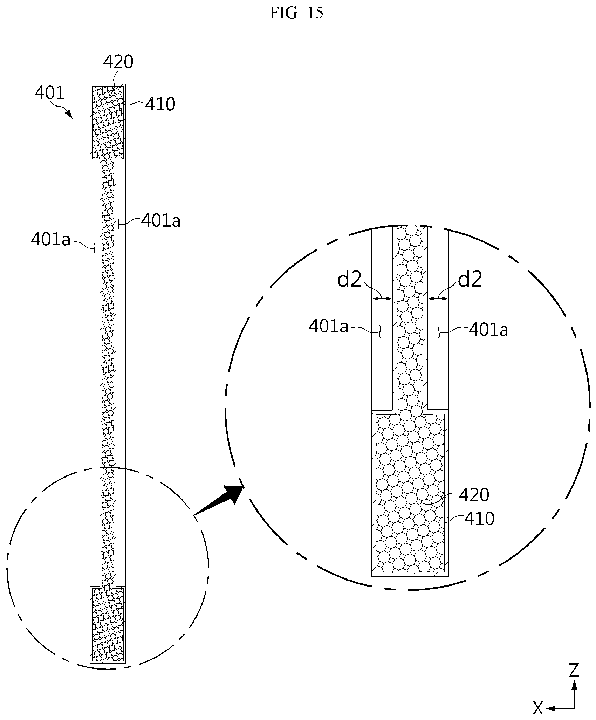

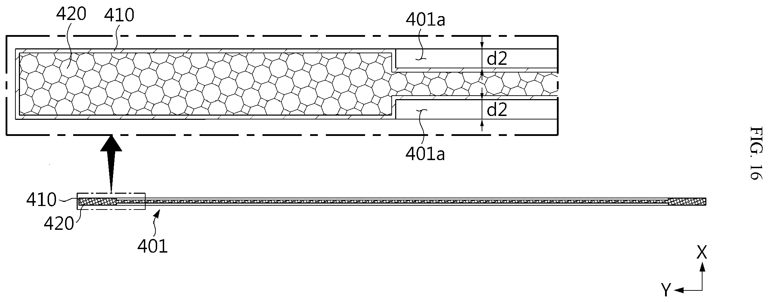

FIG. 14 is a drawing showing a barrier 400d of a battery module 200 according to the fourth embodiment of the present disclosure. FIG. 15 is a cross-sectional view taken along the cutting line F-F' of FIG. 14. FIG. 16 is a cross-sectional view taken along the cutting line G-G' of FIG. 14.

Referring to FIGS. 14 to 16, the concave depth of the accommodation space 401a of the battery module 200 according to the fourth embodiment of the present disclosure may be constant. In addition, the accommodation space 401a may be recessed to have a rectangular shape. Alternatively, the accommodation space 401a may be recessed to have a circular or oval shape.

According to this configuration of the present disclosure, the barrier 400d may have a uniform insulating effect while absorbing the swelling of the battery cell 220.

In addition, according to this configuration of the present disclosure, the productivity of the battery module 200 may be improved. Since the insulation member 420 includes a porous material that is easy to work, the insulation member 420 may be formed integrally. In addition, since the case 410 surrounds the insulation member 420 and the barrier 400d is manufactured through vacuum packaging, the barrier 400d may have a three-dimensional shape.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in the vehicle in addition to the battery module or the battery pack. For example, the vehicle according to the present disclosure may further include a vehicle body, a motor, a control device such as an ECU (electronic control unit), in addition to the battery module 200 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a frame providing a space therein;
a plurality of battery cells positioned inside the frame; and
a barrier configured to cover at least one of the plurality of battery cells, the barrier including an insulation member having a plurality of holes and a case accommodating the insulation member and having an interior configured as a vacuum.

2. The battery module according to claim 1,
wherein the plurality of battery cells are stacked along a right and left direction,
wherein each of the plurality of battery cells includes:
an accommodation portion extending in a front and rear direction and containing an electrode assembly; and
an electrode lead protruding forward from the accommodation portion,
wherein the barrier includes an insulation portion positioned between the accommodation portions of neighboring battery cells among the plurality of battery cells.

3. The battery module according to claim 2,
wherein the barrier further includes a pressurizing portion extending forward from the insulation portion and covering a front side of the accommodation portion of the neighboring battery cell.

4. The battery module according to claim 3,
wherein a width of the pressurizing portion in the right and left direction is larger than a width of the insulation portion in the right and left direction.

5. The battery module according to claim 3,
wherein the insulation portion has an accommodation space that is concave inward and faces the accommodation portion of the neighboring battery cell.

6. The battery module according to claim 5,
wherein when a thermal event occurs, at least a portion of the accommodation portion of the neighboring battery cell is accommodated in the accommodation space.

7. The battery module according to claim 5,
wherein a concave depth of the accommodation space becomes deeper as being close to a center portion based on a height of the insulation portion in an upper and lower direction.

8. The battery module according to claim 5,
wherein a concave depth of the accommodation space becomes deeper as being close to a center portion based on a length of the insulation portion in the front and rear direction.

9. A battery pack comprising the battery module according to any one of claims 1 to 8.

10. A vehicle comprising the battery module according to any one of claims 1 to 8.
